# EUROPEAN PATENT APPLICATION

(11) **EP 4 620 298 A2**
(43) Date of publication of application: **24.09.2025**
(21) Application number: 25186371.8
(22) Date of filing: 14.11.2017
(51) Int. Cl.: A01K 61/13

(54) **NET FOR SUBMERSIBLE MARINE FISH PEN**

(30) Priority: 15.11.2016 NO 20161802
(62) Divisional of application: 23204643.3
(71) Applicant: Marine Constructions AS, 5210 OS (NO)
(72) Inventor: GRYTDAL, Andreas, 5215 Lysekloster (NO); AASEN, Kjell Audun, 1397 Nesøya (NO)
(74) Representative: Acapo Onsagers AS

(57) **Abstract**

Roof construction (26) for a fish pen (1) comprising a circular buoyant collar (10) characterizing in that the roof construction is a substantially conical roof construction (26) comprising several elongated arms (60) attached on their lower ends to the buoyant collar (10), and on their upper ends to a circular frame (62), and wherein one or two roof nets (70, 72) are arranged on top of or suspended from the arms (60) to form roofing on the fish pen (1).

## Description

### Field of the invention

The present invention concerns a fish pen, more specifically a submergible sea fish pen having a double net wall and a roof, for use in the aqua culture industry.

### Background of the invention

Fish escaping from fish pens in aqua culture facilities are a known problem. In addition, infesting sea lice in the upper water column, and challenges caused by deformation of the pen net during times of high wave activity and current, are known problems.

It is known to construct fish pens with a double net wall. However, known constructions are constructed such that the two layers of nets are arranged close to each other, for example mounted on each side of the buoyancy collar. These have to be installed separately, and when there is a current present, they will be in contact with each other, which may cause abrasion and damage to the net wall.

The following prior art can be mentioned:
NO 337333, which discloses a fish pen having vertical tensioned anchorage coupled to an anchor on the sea bed.

WO0165925, which is disclosing a device for raising and lowering a fish pen.

US 6230646, which is describing a deep-water fish farming facility anchored fixedly on the sea bed.

WO 2014032199, which is disclosing a floating cage for aqua culture. The cage is kept under water using a load.

NO 20120807, which is describing a fish pen for removing sea lice or other treatment of fish. The fish pen comprises a sea lice protection skirt which envelop the fish pen, and which can be raised and lowered, depending on if a closed fish pen is needed or not.

NO333479, which is disclosing a small-meshed fluid permeable net which envelope a fish pen and which isolates the fish pen from undesired organisms. The fluid permeable net extends down along the depth direction of the fish pen, and creates a skirt around the fish pen. The skirt comprises buoyancy elements in the upper edge, and a load in the lower most edge.

WO2011133045 which is describing a floating closed fish pen having two separate walls. The outer wall is not permeable to water, while the inner wall is water permeable.

The publication "Ny lukket merd for postsmolt-produksjo", Kyst (http://kyst.no/nyheter/ny-lukket-merd-for-postsmolt-produksjon/) (02.05.2014) concerns a closed floating fish pen having a double wall.

### Object of the present invention

An object of the invention is to provide a fish pen with a double net wall, in which the net walls are kept separated from each other by spreading the net walls out from each other with a downward pulling force, wherein the lower part of the net walls are attached to their own bottom cone, which are connected at a distance from each other. A winch mounted on the sea bed, possibly a load pulling down on the bottom cones.

Another purpose of the invention is to provide a closed fish pen with a roof construction providing easy access to the fish pen.

### Brief summary of the invention

A fish pen according to the invention comprises a buoyant collar in the form of a floating circular construction. According to one aspect, the buoyant collar is made from sections of steel pipe welded together. The buoyant collar may alternatively be made from plastic material. It can also be made from pipes or beams assembled in a truss work of a metal or plastic material. The buoyant collar can have a suitable diameter convenient for aqua culture, e.g. a diameter of 30-100 meters. The buoyant collar provides the fish pen with buoyancy. According to one aspect, the buoyant collar is equipped with a walkway around its circumference.

Two net bags having substantially cylindrical intermediate parts are attached at their upper edges to the buoyant collar, concentrically to each other, but in different heights. Alternatively, the inner net bag can be shorter than the outer net bag. At the lower part of the cylindrical intermediate parts, the net bags are attached to a bottom ring maintaining the intermediate parts in a cylindrical form.

Each net bag has a lower, conical part with a pointed end. The ends of each net bag are attached to their own bottom cone, which are connected in a certain distance, e.g. 50 to 500 cm. The lowermost bottom cone has an attachment point for connection to a winch or a load, which pulls the net bags towards the sea bed.

The net bags have integrated tension ropes extending from the buoyant collar to the bottom cones. The tension ropes transfer forces between the buoyant collar and bottom cone arising because of the pulldown. According to one aspect, the tension ropes may be fiber ropes having a typical diameter of 30 to 70 mm. Alternatively, the tension ropes may be made from wire or chains. When the bottom cones are pulled down by a winch or a load, the net bags are brought into tension, which spread out the net walls from each other in a certain distance decided by the distance between the bottom cones, e.g. 0,5-3 meters.

Mounted on the buoyant collar is a roof construction which comprises several elongated arms attached at their lower ends to the buoyant collar, and at their upper ends to a circular frame. The arms extend from the buoyant collar to the circular frame, and create a substantially conical top. Net sections, hereinafter the "roof nets", continue from the net bags and are suspended from the arms; and, thus, create a substantially conical roof on the fish pen. The roof nets can be provided in one single layer, or, preferably two layers. The lower part of the roof nets is attached to the buoyant collar, and upper part of the circular frame.

According to one aspect, the arms are mounted such that an open access zone is formed between two arms providing access to the interior of the fish pen. According to one aspect, the roof nets are in this access zone provided with a zipper such that the roof can be opened, e.g. to be able to pump fish from the fish pen to a well boat. The circular frame forms an air-filled dome over the fish pen which gives the fish access to a water surface when the fish pen is pulled down.

The invention is characterized by features provided in the characteristic part of the following claim 1. The preferred embodiments are specified in the dependent claims.

### Description of the Figures

The invention is disclosed further with reference to the appended drawings, wherein:
Figure 1 shows a perspective outline of the fish pen according to the invention.
Figure 2 shows a lateral outline of the fish pen according to the invention.
Figures 3 and 4 show a detailed perspective outline showing the roof nets and the net bags attached to the buoyant collar.
Figure 5 shows a perspective outline of the lower part of the net bags attached to the bottom cones.
Figure 6 shows a perspective outline of the bottom cones.
Figure 7 shows a lateral outline of the fish pen, and shows double roof and walkway around the buoyant collar.
Figure 8 shows a well boat positioned at the fish pen, e.g. for pumping fish out of the fish pen, and the zippers around the periphery of the roof in an access zone.
Figure 9 shows a perspective outline of the buoyant collar and the bottom ring.

### Detailed description

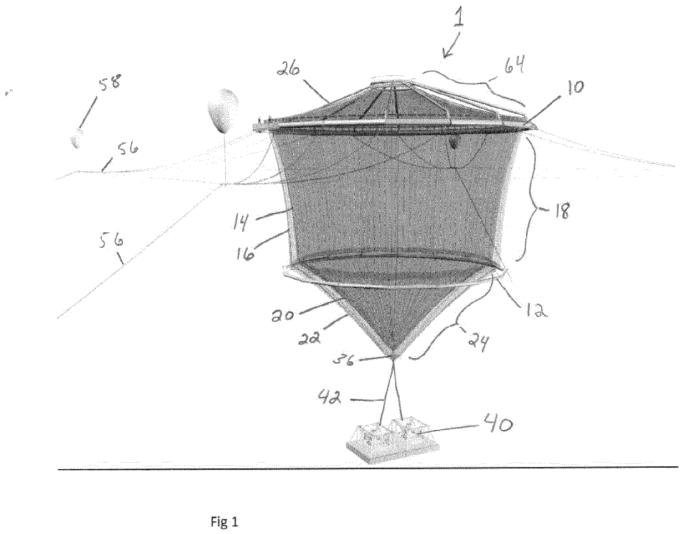

As shown in Figure 1, the fish pen 1 comprises a buoyant collar 10 and a bottom ring 12 arranged in a certain distance under the buoyant collar 10. The floating collar 10 is preferably made from steel pipes, and provides buoyancy to the fish pen. Arranged between the buoyant collar 10 and the bottom ring 12 are two substantially cylindrical net bags, an inner net bag 14 and an external net bag 16, which together form a substantially cylindrical intermediate part 18. At the lower end of the net bags are arranged two substantially conical bottom nets, in extension of the cylindrical net bags - an inner bottom net 20, and external bottom net 22, which together form a conical lower part 24. A roof construction 26 is arranged on top the buoyant collar 10.

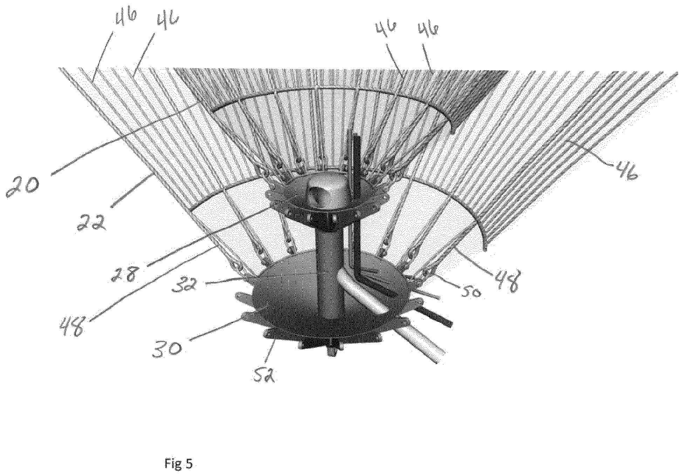

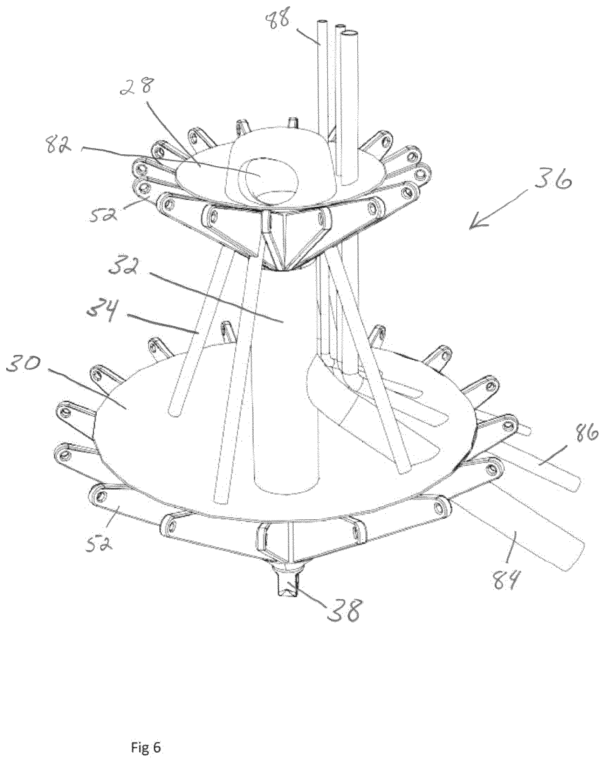

The lower most part of each bottom net 20, 22 is connected to a separate bottom cone. Inner bottom net 20 is attached to an upper bottom cone 28, and the external bottom net 22 is attached to a lower bottom cone 30, as shown in Figure 5. The bottom cones are attached to each other in a certain distance using a distance post 32, as shown in Figure 6. According to one aspect, several supporting arms 34 can be arranged between the bottom cones, as shown in Figure 6. The two bottom cones and the distance post together form a pull-down body 36 having an upper attachment point and a lower attachment point. The pull-down body 36 has an attachment point 38 on its lower part.

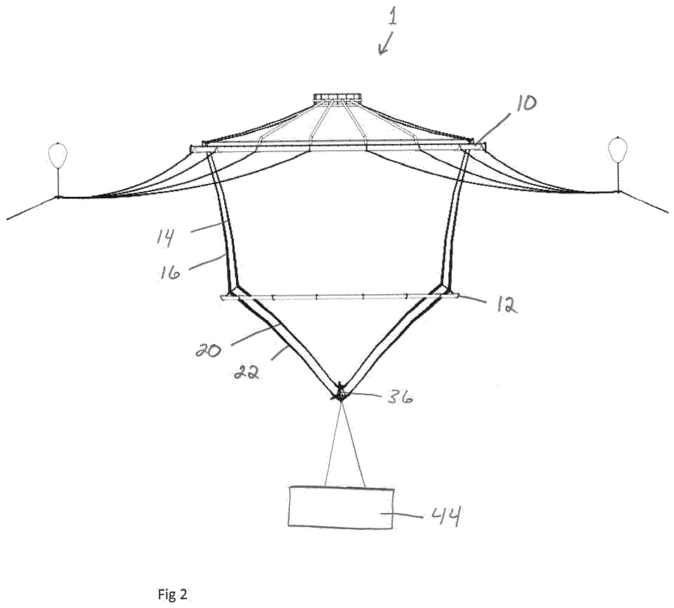

As shown in Figure 1, a winch 40 is mounted on the sea bed, arranged under the fish pen 1. A winch cable 42 extends from winch 40 to the pull-down body 36. The winch acts against the buoyancy of the buoyant collar 10, and pulls down the fish pen 1. When the winch is pulling down on the pull-down body 36, the net bags 14, 16 and the bottom nets 20, 22 are tensioned. This causes the external nets 16, 22 to be spread out from the inner nets14, 20, and they are held separated from each other. In an alternative embodiment, the winch 40 may be substituted by a load 44, as shown in Figure 2. The bottom ring 12 ensures that the intermediate part 18 is held in a substantially cylindrical form. The fish pen can be pulled down such that the buoyant collar 10 is pulled down beneath the surface, or is submitted to sufficient pull-down such that the net bags are spread out from each other, while the buoyant collar remains on the surface.

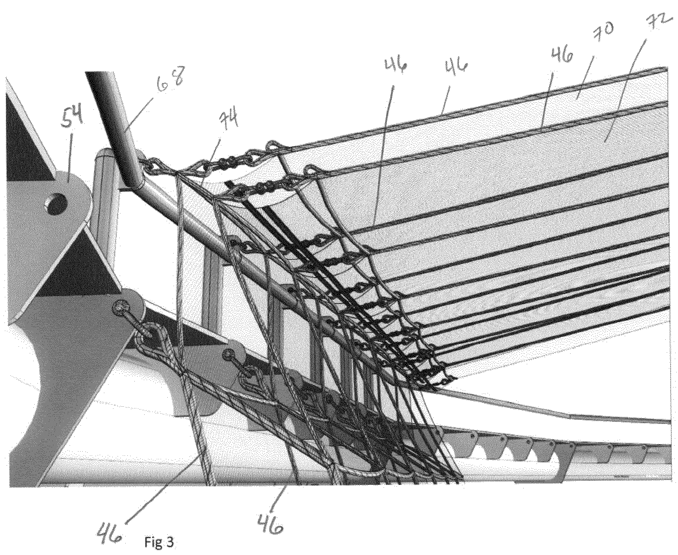

Due to the sizes of the fish pens, the force from the pull-down is very high; e.g., up to 250 metric tons. Common net materials do not withstand such a load. Consequently, the nets are equipped with integrated tension ropes which absorb the loads from the pull-down. Several of the tension ropes 46 have an extension 48 with attachment device 50, which is connected to corresponding attachment devices 52, 54 onto the bottom cones and the buoyant collar, respectively, as shown in Figures 3, 4, 5, and 6.

As shown in Figure 1, fish pen 1 is anchored in the sea using several anchoring ropes 56, preferably arranged with several buoys 58.

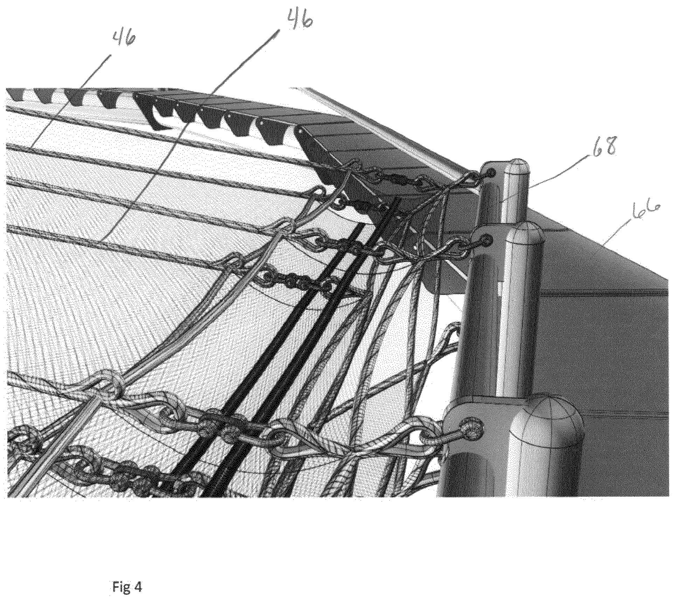

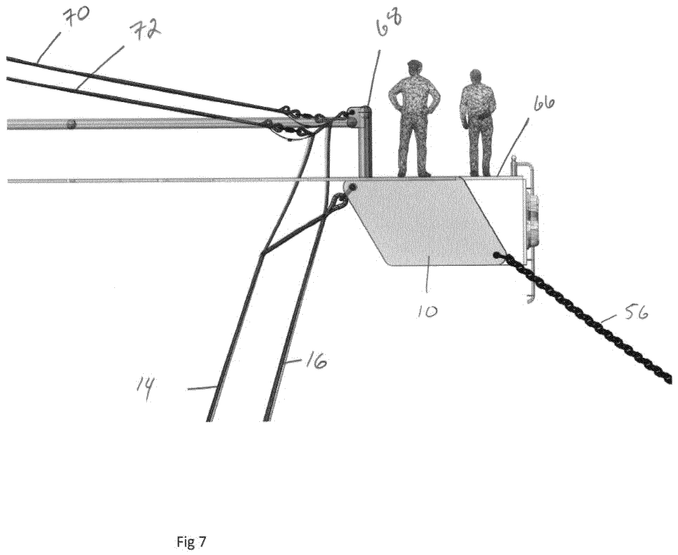

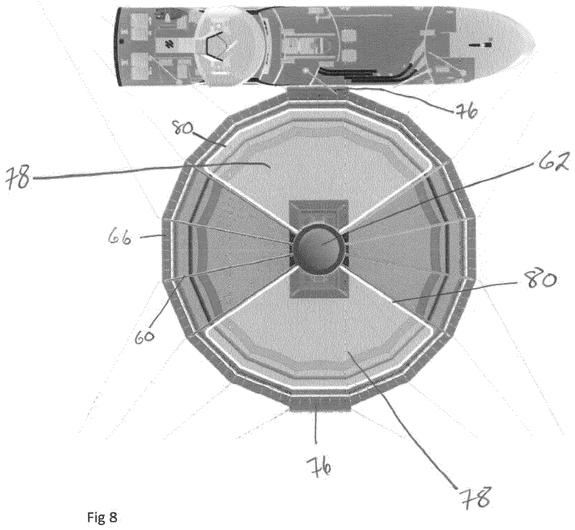

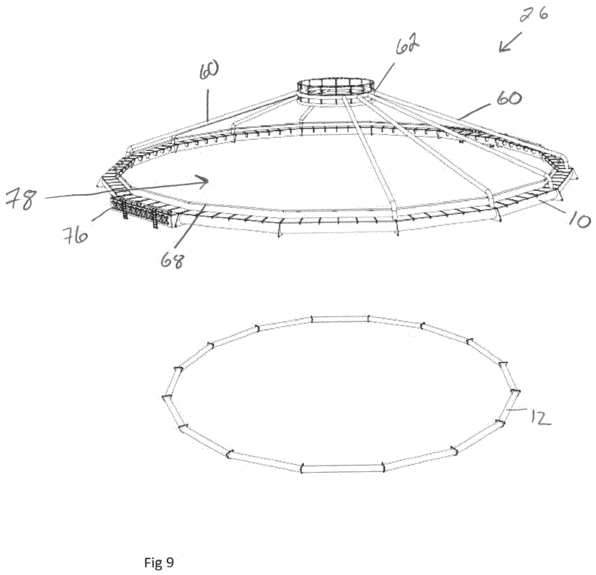

As shown in Figure 1, the fish pen is equipped with a roof construction 26. Roof construction 26 is shown in detail in Figures 8 and 9. Roof construction 26 comprises several elongated arms 60, which extend upward in an angle from the buoyant collar 10 to a circular frame 62, to form a substantially conical top part 64. The roof construction 26 comprises another walkway 66 up onto buoyant collar 10, with a railing 68. One, or preferably two, roof nets, e.g., an external roof net 70 and an inner roof net 72, are placed onto or suspended from the arms 60 for providing a roof on top the fish pens, as shown in Figures 1, 3, and 7, preferably in the extension of the net bags 14, 16. As shown I Figures 3 and 4, the roof nets can be attached to the railing 68. In the case wherein two roof nets are used, these are kept separated using a spacer rope 74. The circular frame 62 has a tight top, and forms an air dome trapping air when the fish pen is pulled down beneath the surface by the winch. Thus, the fish have access to air even when the fish pen has been pulled beneath the surface.

According to one aspect og the invention, the fish pen 1 offers easy access to the inside of the fish pen, e.g., when a well boat is docked alongside the facility for pumping fish, as shown in Figure 8. Consequently, the buoyant collar 10 is equipped with one or more ship landing areas 76. As shown in Figures 8 and 9, two of the arms 60 are arranged in a distance to each other to form one or more access zones 78. The roof nets in the access zone 78 are equipped with a zipper 80 around the circumference, as shown in Figure 8. Thus, the roof nets are easy to open for access to the inside of the fish pen.

As shown in Figure 6, according to one aspect, the distance post 32 of the pull-down body 36 is a cylindrical pipe, having an opening 82 arranged above the upper bottom cone 28. A hose or a pipe 84 is connected to distance post 32. Opening 82 functions as a suction inlet for sucking out dead fish or waste. The pull-down body 36 may further comprise a supply pipe 86 for supplying food, and power/signal cables 88.

### CLAUSES

1. Fish pen (1) having a double net wall (14, 16, 20, 22),
   characterized in that a lower part of the net walls is attached to a pulldown body (36) with an upper attachment point (28) and a lower attachment point (30) having a certain distance between each other, and, wherein, by pulling down the pull-down bodies (36), the net walls are tensioned such that they are spread out from each other and are not in contact with each other.
2. Fish pen (1) according to clause 1,
   characterized in that the fish pen (1) comprises a circular buoyant collar (10), a circular bottom ring (12) arranged under the buoyant collar (1), a substantially cylindrical inner net bag (14) and a substantially cylindrical external net bag (16) arranged between the buoyant collar (10) and the bottom ring (12), a substantially conical lower, inner bottom net (20) in the extension of inner net bag (14), and a substantially conical lower, external bottom net (22) in extension of external net bag (16), and wherein upper attachment point (28) is attached to the pointed end of bottom net (20) and the lower attachment point (30) is attached to the pointed end of the bottom net (22).
3. Fish pen according to one of the preceding clauses,
   characterized in that the pull down is performed by a winch (40) on the sea bed.
4. Fish pen according to one of the preceding clauses,
   characterized in that the pull down is performed by a load (44) suspended from the pulldown body (36).
5. Fish pen according to one of the preceding clauses,
   characterized in that the net bags (14, 16, 20, 22) have integrated tension ropes (46) arranged to absorb the tension forces from the winch (40) or the load (44).
6. Fish pen according to one of the preceding clauses,
   characterized in that the pulldown body (36) comprises an upper bottom cone (28) and a lower bottom cone (30) attached in a certain distance from a distance post (32).
7. Fish pen according to clause 6,
   characterized in that the distance post (32) is a pipe, having an opening (80) above the upper bottom cone (28), which pipe is connected to a suction hose (84), which pipe is arranged to suck in waste from the fish pen (1).
8. Fish pen according to one of the preceding clauses,
   characterized in that the fish pen (1) further comprises a substantially conical roof construction (26) comprising several elongated arms (60) attached on their lower ends to the buoyant collar (10), and on their upper ends to a circular frame (62), and wherein one or two roof nets (70, 72) are arranged on top of or suspended from the arms (60) to form roofing on the fish pen (1).
9. Fish pen according to clause 7,
   characterized in that the circular frame (62) is tight, and arranged to form an air-filled dome trapping air in the case the fish pen (1) is pulled beneath the surface.
10. Fish pen according to one of the preceding clauses,
   characterized in that at least two of the arms (60) are arranged in a distance to each other to form a access zone (78), and wherein the roof nets (70, 72) in the access zone are equipped with a zipper (80).
11. Fish pen according to one of the preceding clauses,
   characterized in that the buoyant collar (10) comprises a walkway (66).

## Claims

1. Roof construction (26) for a fish pen (1) comprising a circular buoyant collar (10) **characterizing in that** the roof construction is a substantially conical roof construction (26) comprising several elongated arms (60) attached on their lower ends to the buoyant collar (10), and on their upper ends to a circular frame (62), and wherein one or two roof nets (70, 72) are arranged on top of or suspended from the arms (60) to form roofing on the fish pen (1).

2. Roof construction according to claim 1,
wherein the circular frame (62) is tight, and arranged to form an air-filled dome trapping air in the case the fish pen (1) is pulled beneath a water surface.

3. Roof construction according to one of the preceding claims,
wherein at least two of the arms (60) are arranged in a distance to each other to form an access zone (78), and wherein the roof nets (70, 72) in the access zone are equipped with a zipper (80).

4. Roof construction according to one of the preceding claims, wherein the buoyant collar (10) comprises a walkway (66).

5. A fish pen (1) comprising
- a buoyant collar (10) in the form of a floating circular construction;
- two net bags (14,16) having substantially cylindrical intermediate parts are attached at their upper edges to the buoyant collar, concentrically to each other, in different heights. or the inner net bag is shorter than the outer net bag, wherein at the lower part of the cylindrical intermediate parts, the net bags are attached to a bottom ring (12) maintaining the intermediate parts in a cylindrical form, wherein the fish pen comprises a roof construction (26) according to any one of claims 1-4 arranged on top of the buoyant collar (10).

6. Fish pen (1) according to claim 5
wherein the fish pen (1) having a double net wall (14, 16, 20, 22),
wherein a lower part of the net walls is attached to pulldown bodies (36) with an upper attachment point (28) and a lower attachment point (30) having a certain distance between each other, and, wherein, by pulling down the pull-down bodies (36), the net walls are tensioned such that they are spread out from each other and are not in contact with each other.

7. Fish pen (1) according to claim 6, wherein the fish pen (1) comprises a circular bottom ring (12) arranged under the buoyant collar (1), a substantially cylindrical inner net bag (14) and a substantially cylindrical external net bag (16) arranged between the buoyant collar (10) and the bottom ring (12), a substantially conical lower, inner bottom net (20) in the extension of inner net bag (14), and a substantially conical lower, external bottom net (22) in extension of external net bag (16), and wherein upper attachment point (28) is attached to the pointed end of bottom net (20) and the lower attachment point (30) is attached to the pointed end of the bottom net (22).

8. Fish pen according to one of the claims 6-7, wherein the pull down is performed by a winch (40) on the sea bed.

9. Fish pen according to one of the claims6-7, wherein the pull down is performed by a load (44) suspended from the pulldown body (36).

10. Fish pen according to one of the claims 5-9, wherein the net bags (14, 16, 20, 22) have integrated tension ropes (46) arranged to absorb the tension forces from the winch (40) or the load (44).

11. Fish pen according to one of the claims 6-10, wherein the pulldown body (36) comprises an upper bottom cone (28) and a lower bottom cone (30) attached in a certain distance from a distance post (32).

12. Fish pen according to claim 11,wherein the distance post (32) is a pipe, having an opening (80) above the upper bottom cone (28), which pipe is connected to a suction hose (84), which pipe is arranged to suck in waste from the fish pen (1).
